# EUROPÄISCHE PATENTSCHRIFT

(11) **EP 0 652 129 B1**
(45) Veröffentlichungstag und Bekanntmachung des Hinweises auf die Patenterteilung: **12.03.1997**
(21) Anmeldenummer: 94116863.5
(22) Anmeldetag: 26.10.1994
(51) Int. Cl.: B60K 35/00, B60R 11/02, G07C 7/00

(54) **Kraftfahrzeug mit einem Fahrtschreiber**
Motor vehicle having a tachograph
Véhicule à moteur ayant un tachygraphe

(30) Priorität: 09.11.1993 DE 9317101 U
(43) Veröffentlichungstag der Anmeldung: 10.05.1995
(73) Patentinhaber: VDO Adolf Schindling AG, 60326 Frankfurt/Main (DE)
(72) Erfinder: Bartholomäi, Gunther, D-78052 Villingen-Schwenningen (DE); Kluge, Rüdiger, Dipl.-Ing., D-78073 Bad-Dürrheim (DE); Zimmermann, Hans, Dipl.-Ing. (FH), D-78054 Villingen-Schwenningen (DE)

(56) Entgegenhaltungen:
- EP-A- 0 247 550
- EP-A- 0 309 854
- DE-A- 1 430 573
- US-A- 4 421 190
- US-A- 5 020 845

## Beschreibung

Die Erfindung betrifft ein Kraftfahrzeug mit einem Fahrtschreiber, in welchem zur sichtbaren Darstellung von Fahrt- und Arbeitszeitdaten Diagrammscheiben Anwendung finden, für deren Halterung und uhrzeitrichtigen Transport eine mit Zentrier- und Mitnahmemitteln versehene und von einem Laufwerk angetriebene Diagrammscheibenaufnahme vorgesehen und derart angeordnet ist, daß sie zwischen einer Registrierposition innerhalb des Fahrtschreibers und einer Einlege- bzw. Entnahmeposition außerhalb des Fahrtschreibers bewegbar ist.

Die derzeit üblichen Fahrtschreiber, in denen als Aufzeichnungsträger Diagrammscheiben verwendet werden, sind mit einer Tachometerfunktion gekoppelt, die es erforderlich macht, daß diese Fahrtschreiber im Armaturenbrett eines Fahrzeuges derart angeordnet sein müssen, daß sie sich während des Fahrens im engeren Sichtfeld des Fahrers befinden. Diese Einbausituation bedeutet jedoch, daß sich zwischen dem Fahrtschreiber und dem Fahrer die Lenksäule und das Lenkrad befinden und somit die Zugänglichkeit beim Eingeben bzw. Entnehmen der Diagrammscheiben, gleichgültig, ob es sich bei dem eingesetzten Fahrtschreiber um einen solchen mit einem aufklappbaren oder herausziehbaren Diagrammscheibenträger oder um einen solchen mit selbsttätigem Diagrammscheibeneinzug handelt, behindert ist.

Es ist daher naheliegend, den Fahrtschreiber ohne eine Tachometerfunktion einzusetzen, d.h. den eigentlichen Fahrtschreiber räumlich von einem für die Anzeige der Geschwindigkeit und des zurückgelegten Weges erforderlichen Anzeigeinstrument zu trennen, wobei zweckmäßigerweise beide Geräte über eine geeignete Datenkopplung in Verbindung bleiben sollten.

Die Verwendung von Diagrammscheiben, die den Vorzug haben, einen relativ leicht handhabbaren dezentralen Datenspeicher darzustellen, dessen Inhalt sowohl als Sofortinformation unmittelbar, d.h. ohne technische Hilfsmittel verwenden zu müssen, lesbar ist und somit bei stichprobenweisen Kontrollen die Fahrtdaten eines Transportauftrages, einer Schicht oder eines Arbeitstages sowie das Einhalten der Arbeitszeitrichtlinien der sog. Sozialvorschriften sozusagen auf einen Blick überschaubar machen, erfordert nach wie vor eine für den Fahrer ergonomisch günstige Anordnung des Fahrtschreibers. Das heißt, der Fahrtschreiber muß wenigstens in einem für den Fahrer bequem zugänglichen Handhabungsbereich angeordnet werden. Die Trennung von Anzeige und Registrierung verursacht somit einen zusätzlichen Raumbedarf in einem Bereich, in welchem ohnehin eine hohe Instrumentendichte gegeben ist.

Wird in dieser Situation ein Fahrtschreiberkonzept vorgesehen, bei dem die Diagrammscheiben selbsttätig eingezogen und ausgegeben werden können, ist der mögliche Anordnungsradius des Fahrtschreibers größer als bei einem Fahrtschreiberkonzept, bei dem die Diagrammscheiben von Hand auf die mit einem Zentrier- und Mitnahmedorn versehene Diagrammscheibenaufnahme aufgelegt werden müssen und zwar deshalb, weil der automatische Transport und die ebenfalls automatisch erfolgende Zentrierung der Diagrammscheiben das Einlegen einer Diagrammscheibe von der subjektiven Sorgfalt des Bedienenden unabhängig machen. Der technische Aufwand, mit dem dieser Effekt erzielt wird, ist jedoch sehr hoch, zumal verschiedene Funktionskontrollmittel vorgesehen werden müssen, um bei einem Verkanten und Hängenbleiben einer Diagrammscheibe einen Totalausfall des Fahrtschreibers zu vermeiden. Hinzu kommt, daß ein, was wünschenswert wäre, wahlweises Verwenden von Einzel- und Bündeldiagrammscheiben einen erheblichen zusätzlichen technischen Aufwand erfordern würde und die erzielbare Mindestbauhöhe eines derartigen Fahrtschreibers im wesentlichen durch den für die Aufnahme einer durch den Schlitz eingegebenen Diagrammscheibe heb- und senkbaren Zentrier- und Mitnahmedorn bestimmt ist.

Ausgehend von dem unter diesen Umständen zu bevorzugenden Konzept mit einer relativ zum Gehäuse des Fahrtschreibers bewegbaren Diagrammscheibenaufnahme bestand die Aufgabe der vorliegenden Erfindung demzufolge darin, die Handhabung von Diagrammscheiben beim Einlegen in und Entnehmen aus einem Fahrtschreiber ohne wesentlichen zusätzlichen Aufwand und ohne wesentliche Beeinträchtigung der Instrumentierung des Fahrzeuges zu verbessern.

Die Lösung der Aufgabe beschreibt der Anspruch 1. Die in den Unteransprüchen dargestellten Lösungsmerkmale sind vorteilhafte Weiterbildungen der gefundenen Erfindung.

Der besondere Nutzen, den die Erfindung bietet, resultiert aus der Verwendung eines Fahrtschreibertyps flacher Bauform mit herkömmlicher Handhabung beim Einlegen und Entnehmen der Diagrammscheiben sowie der Anordnung dieses Fahrtschreibers im "Über-Kopf-Bereich" des Fahrers. Bei einer derartigen Anordnung eines Fahrtschreibers darf der Fahrtschreiber gegenüber Geräten, die ebenfalls in diesem Bereich angeordnet werden könnten bzw. dem an sich vorgesehenen Stauraum absolute Anordnungspriorität für sich in Anspruch nehmen. Mit anderen Worten, eine für die Handhabung der Diagrammscheiben, die Betätigung beispielsweise von Funktionstasten und das Lesen angezeigter Werte ergonomisch richtige Lage des Fahrtschreibers kann im Gegensatz zum Armaturenbretteinbau weitgehend frei optimiert werden.

Von Vorteil ist ferner, daß bei der vorgesehenen Anordnung der Fahrtschreiber völlig unbehindert zugänglich ist und nach dem Verschwenken und dem Herausziehen der Schublade sich die Diagrammscheibenaufnahme in der normalen Sitzposition des Fahrers in dessen Sehfeld befindet. Dabei ist die optimale Stellung der Diagrammscheibenaufnahme bei herausgezogener Schublade durch geeignete Anschläge fixiert. Das Verschwenken des Trägers wird zweckmäßigerweise durch eine Bremse gedämpft.

Erwähnenswert ist außerdem, daß durch die gefundene Lösung die im Armaturenbrett üblicherweise herrschende Instrumentendichte zumindest nicht weiter gesteigert wird. Die gute Zugänglichkeit ist außerdem Voraussetzung für ein sowohl müheloses als auch ordnungsgemäßes Wechseln der Diagrammscheiben.

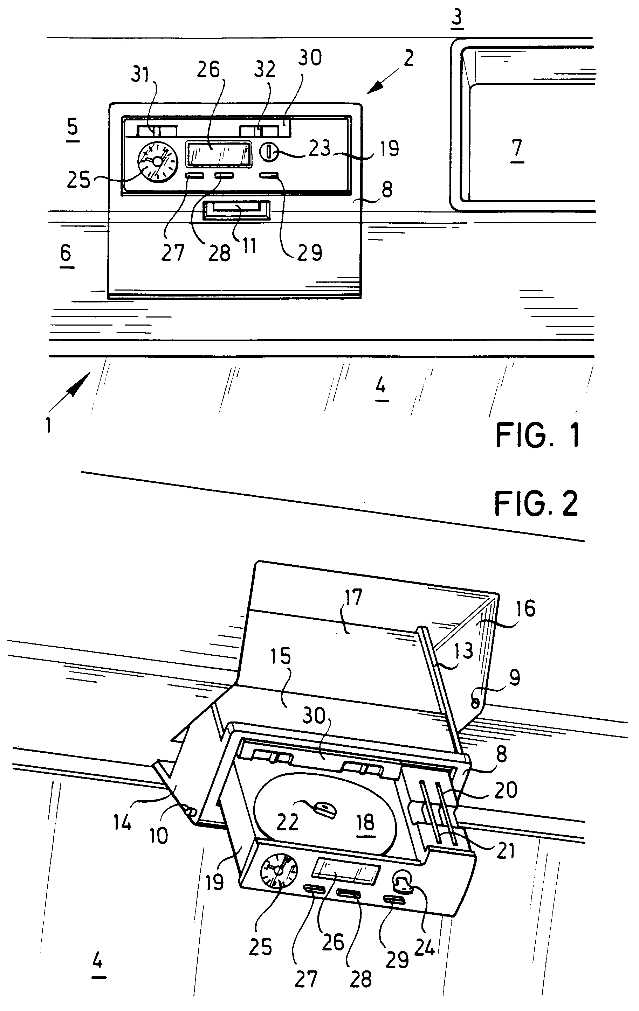

Im folgenden sei die Erfindung anhand der Zeichnungen erläutert:
Es zeigen Fig. 1 eine Teilansicht des Dachunterbaus eines Fahrzeuges mit einer Frontansicht eines in dem Dachunterbau angeordneten Fahrtschreibers,
Fig. 2 eine Perspektivdarstellung des in Einlegeposition befindlichen geöffneten Fahrtschreibers,
Fig. 3 eine Studie der Grenzstellungen eines im Dachunterbau eines Fahrzeuges angeordneten Fahrtschreibers.

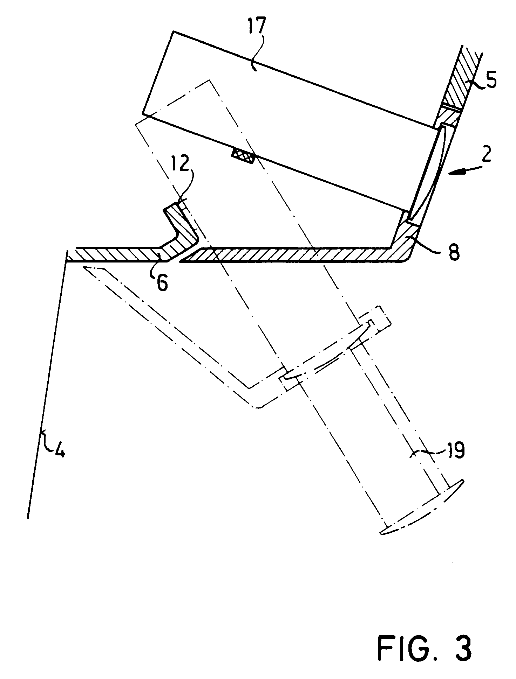

Wie aus der Fig. 1 hervorgeht, weist der in einem Dachunterbau 1 eines Kraftfahrzeuges im wesentlichen eines Buses oder Lastkraftwagens angeordnete Fahrtschreiber 2 ein flaches Gehäuse auf, dessen Abmessungen vorzugsweise derart gewählt sind, daß der Fahrtschreiber 2 wahlweise auch in ein für ein Autoradio vorgesehenes oder parallel zu diesem ausgebildetes Fach einbaubar ist. Mit 3 ist das Dach des Kraftfahrzeuges, in dem der Fahrtschreiber 2 eingebaut ist, bezeichnet und mit 4 dessen Frontscheibe. Der Dachunterbau 1 besteht im wesentlichen aus einer mit 5 bezeichneten Frontwand und einem mit 6 bezeichneten Boden. Mit 7 ist ein ggf. in den Raum vorspringend ausgebildetes Fach bezeichnet, das als Stauraum genutzt oder für die Unterbringung von Geräten, darunter beispielsweise auch eines Fahrtschreibers, vorgesehen werden kann. Wie ferner aus der Fig. 1 ersichtlich ist, bildet ein den Fahrtschreiber 2 halternder Träger 8 einen integralen Teil des Dachunterbaus 1. Der Träger 8 ist schwenkbar gelagert und wird mittels geeigneter beiderseits des Trägers 8 wirkender Verriegelungsmittel, von denen in Fig. 2 jeweils eine Öffnung 9 und ein Bolzen 10 sichtbar sind, in der in Fig. 1 gezeigten geschlossenen Stellung gehalten. Mittels einer gefedert gelagerten Griffzunge 11, die in eine Mulde an der Unterseite des Trägers 8 hineinragt, läßt sich der Träger 8 bequem entriegeln. Eine nicht dargestellte beispielsweise an der Seite des Trägers 8 angebrachte Bremsvorrichtung hat die Aufgabe, den Träger 8 nach dem Entriegeln weich gegen einen oder mehrere gleichwirkender Anschläge zu führen, welche die geöffnete Stellung des Trägers 8 bestimmen. In Fig. 3 ist die Anschlagebene symbolisch dargestellt und mit 12 bezeichnet.

Ergänzend sei noch ausgeführt, daß an dem als Kunststoff-Spritzteil hergestellten Träger 8 ein durch geeignete seitlich vorgesehene Wangen 13, 14 versteifter und im wesentlichen rechtwinkelig zur Frontwand des Trägers 8 liegender Zwischenboden ausgebildet ist. Dieser dient dem aufzunehmenden Fahrtschreiber 2 und einem für die Befestigung des Fahrtschreibers 2 beispielsweise mittels Spreizfedern vorgesehenen Blechrahmen 15 als Auflage. Zweckmäßigerweise sind, was im einzelnen nicht dargestellt ist, an den Wangen 13 und 14 die Lagerungen des Trägers 8 angeformt, während diesen zugeordnete Achsstummel in Seitenwänden 16 des Dachunterbaus 1 angebracht sind.

Bei dem dargestellten Fahrtschreiber 2, dessen quaderförmiges Gehäuse mit 17 bezeichnet ist, ist für das Wechseln der Diagrammscheiben 18 eine Schublade 19 vorgesehen, in welcher diverse Funktionsgruppen des Fahrtschreibers 2 angeordnet sind und welche der Halterung von Fahrer und Beifahrer zugeordneten Datenkarten 20 und 21 dient. Den Diagrammscheiben 18, von denen ebenfalls jeweils eine dem Fahrer und eine dem Beifahrer zugeordnet ist, sind in üblicher Weise geeignete Distanz- sowie Zentrier- und Mitnahmemittel zugeordnet, von denen in Fig. 2 lediglich der unrund ausgebildete Zentrierdorn 22 sichtbar ist. Mit diesem Konzept lassen sich mit dem Schließen und Verriegeln der Schublade 19 gleichzeitig die Diagrammscheiben 18 und die Datenkarten 20 und 21 unzugänglich verschließen. Zu diesem Zweck ist ein Schloß 23 vorgesehen, dessen in geeigneter Weise ausgebildeter Schlüssel 24 als Griff für die Betätigung der Schublade 19 dienen kann. An der Frontwand der Schublade 19 sind außer dem Schloß 23 eine mit dem in der Schublade 19 angeordneten Diagrammscheibenlaufwerk getrieblich in Verbindung stehende Uhr 25, ein Zeilendisplay 26 sowie Tasten 27, 28 und 29 angeordnet. Von letzteren dient beispielsweise die Taste 29 als Wähltaste, d.h. sie dient dem Fahrer dazu, Betriebszustände des Fahrzeuges sowie Arbeitszeitdaten zur Anzeige auf dem Zeilendisplay 26 anwählen zu können. Mit 30 ist ein feststehendes frontseitiges Wandteil des Gehäuses 17 bezeichnet, in dem Schiebeschalter 31 und 32 gelagert sind. Diese dienen der Fahrzeugbesatzung, ihre jeweilige Tätigkeit einzustellen, wobei durch eine Sperreinrichtung gewährleistet ist, daß jeweils nur ein Fahrer die Lenkstellung wählen kann.

Der Vollständigkeit halber sei noch erwähnt, daß zwischen dem Verschwenken des Trägers 8 und dem Betätigen der Schublade 19 durch geeignete Sperrmittel eine Zwangsreihenfolge vorgesehen sein kann. Ebenso ist es denkbar, wenigstens die Schublade 19 des Fahrtschreibers 2 motorisch zu betätigen.

## Patentansprüche

1. Kraftfahrzeug mit einem Fahrtschreiber, in welchem zur sichtbaren Darstellung von Fahrt- und Arbeitszeitdaten Diagrammscheiben Anwendung finden, für deren Halterung und uhrzeitrichtigen Transport eine mit Zentrier- und Mitnahmemitteln versehene und von einem Laufwerk angetriebene Diagrammscheibenaufnahme vorgesehen und derart angeordnet ist, daß sie zwischen einer Registrierposition innerhalb des Fahrtschreibers und einer Einlege- bzw. Entnahmeposition außerhalb des Fahrtschreibers bewegbar ist,
dadurch gekennzeichnet,
daß der Fahrtschreiber (2) als quaderförmiges, flaches Einbaugerät ausgebildet ist, in welchem die Diagrammscheibenaufnahme als Schublade (19) verschiebbar gelagert ist und die Frontwand der Schublade (19) wenigstens teilweise die an einer Schmalseite des Einbaugerätes vorgesehene Frontwand des Fahrtschreibers (2) bildet,
daß für die Befestigung des Fahrtschreibers (2) fahrzeugseitig ein um eine Achse schwenkbarer Träger (8) vorgesehen ist und
daß der Träger (8) unter dem Dach (3) des Fahrerhauses des Kraftfahrzeuges angeordnet ist.

2. Kraftfahrzeug nach Anspruch 1,
dadurch gekennzeichnet,
daß der Träger (8) als integraler Teil eines zwischen der Frontscheibe (4) und dem Dach (3) des Fahrerhauses des Kraftfahrzeuges vorgesehenen Dachunterbaus (1) ausgebildet ist.

3. Kraftfahrzeug nach Anspruch 2,
dadurch gekennzeichnet,
daß an dem Dachunterbau (1) beiderseits einer Aussparung für den Träger (8) Seitenwände (16) für das Anbringen von Achsstummeln angeformt sind und
daß der Träger (8) mit Lagerungen versehene Wangen (13, 14) aufweist.

4. Kraftfahrzeug nach Anspruch 1,
dadurch gekennzeichnet,
daß dem Träger (8) dämpfende Anschläge zugeordnet sind.

5. Kraftfahrzeug nach Anspruch 1,
dadurch gekennzeichnet,
daß dem Träger (8) eine Bremse, beispielsweise eine Gasfeder, zugeordnet ist.

6. Kraftfahrzeug nach Anspruch 1,
dadurch gekennzeichnet,
daß an dem Träger (8) mit dem Dachunterbau (1) unmittelbar oder mittelbar in Wirkverbindung stehende Verriegelungsmittel (10, 11) vorgesehen sind.

7. Kraftfahrzeug nach Anspruch 1,
dadurch gekennzeichnet,
daß der Träger (8) im wesentlichen zwei unter einem Winkel zueinanderstehende, den Konturen des Dachunterbaus (1) entsprechende Außenwände aufweist,
daß ein durch Wangen (13, 14) versteifter Zwischenboden vorgesehen ist und daß mit dem Zwischenboden ein dem Befestigen des Fahrtschreibers (2) dienender Blechrahmen (15) verbunden ist.

## Claims

1. A motor vehicle having a tachograph in which graph charts are used for the visible presentation of journey and work-time data, a graph chart receiver which is provided with centring and entraining means and which is driven by a drive being provided for the mounting and real-time transportation of these graph charts and being arranged such that it is movable between a recording position within the tachograph and an insertion and removal position outside the tachograph, characterized
in that the tachograph (2) is constructed as a cuboid, flat built-in device in which the graph chart receiver is displaceably mounted as a drawer (19) and the front wall of the drawer (19) at least partially forms the front wall of the tachograph (2), provided on a narrow side of the built-in device,
in that, to secure the tachograph (2), a support (8) which is pivotable about an axis is provided on the vehicle, and in that the support (8) is arranged under the roof (3) of the driver's cab of the motor vehicle.

2. A motor vehicle according to Claim 1, characterized
in that the support (8) is constructed as an integral part of a substructure (1) of the roof provided between the windscreen (4) and the roof (3) of the driver's cab of the motor vehicle.

3. A motor vehicle according to Claim 2, characterized
in that side walls (16) for mounting axle stubs are integrally formed on the substructure (1) of the roof on either side of a recess for the support (8), and
in that the support (8) has cheeks (13, 14) provided with bearings.

4. A motor vehicle according to Claim 1, characterized
in that damping stops are associated with the support (8).

5. A motor vehicle according to Claim 1, characterized
in that a brake, for example a gas spring, is associated with the support (8).

6. A motor vehicle according to Claim 1, characterized
in that locking means (10, 11) which are directly or indirectly in operative connection with the substructure (1) of the roof are provided on the support (8).

7. A motor vehicle according to Claim 1, characterized
in that the support (8) has substantially two outer walls which are at an angle to one another and correspond to the contours of the substructure (1) of the roof,
in that an intermediate base reinforced by cheeks (13, 14) is provided, and
in that a sheet-metal frame (15) serving to secure the tachograph (2) is connected to the intermediate base.

## Revendications

1. Véhicule automobile avec un enregistreur de route dans lequel, pour la visualisation de données de route et de temps de travail, on fait usage de disques de diagramme dont la fixation et le transport en fonction du temps réel sont assurés par un dispositif de réception de disques de diagramme qui est doté de moyens de centrage et d'entraînement et entraîné par un mécanisme et disposé de telle sorte qu'il puisse être déplacé entre une position d'enregistrement à l'intérieur de l'enregistreur de route et une position d'introduction ou de prélèvement à l'extérieur dudit enregistreur de route,
caractérisé par le fait
que ledit enregistreur de route (2) est réalisé sous la forme d'un appareil à encastrer parallélépipédique, plat dans lequel le dispositif récepteur de disques de diagramme est monté de manière déplaÇable comme tiroir (19) et que la paroi frontale dudit tiroir (19) forme au moins partiellement la paroi frontale de l'enregistreur de route prévue sur un petit côté de l'appareil à encastrer, que pour la fixation de l'enregistreur de route (2) est prévu, du côté véhicule, un support (8) pouvant pivoter autour d'un axe et
que ledit support (8) est disposé sous le pavillon (3) du poste de conduite du véhicule automobile.

2. Véhicule automobile selon la revendication 1,
caractérisé par le fait
que le support (8) est réalisé comme partie intégrale d'une infrastructure de pavillon (1) prévue entre le parebrise (4) et le pavillon (3) du poste de conduite du véhicule automobile.

3. Véhicule automobile selon la revendication 2,
caractérisé par le fait
que sur l'infrastructure de pavillon (1) sont moulées, de part et d'autre d'un évidement pour le support (8), des parois latérales (16) pour la mise en place de tourillons et
que ledit support (8) présente des faces latérales (13, 14) dotées de supports de montage.

4. Véhicule automobile selon la revendication 1,
caractérisé par le fait
qu'audit support (8) sont associées des butées d'amortissement.

5. Véhicule automobile selon la revendication 1,
caractérisé par le fait
qu'audit support (8) est associé un frein, par exemple un vérin pneumatique.

6. Véhicule automobile selon la revendication 1,
caractérisé par le fait
que sur ledit support (8) sont prévus des moyens de verrouillage (10, 11) coopérant fonctionnellement directement ou indirectement avec l'infrastructure de pavillon (1).

7. Véhicule automobile selon la revendication 1,
caractérisé par le fait
que ledit support (8) présente, pour l'essentiel, deux parois extérieures disposées sous un certain angle l'une par rapport à l'autre et correspondant aux contours de l'infrastructure de pavillon (1),
qu'il est prévu un fond intermédiaire renforcé par des parois latérales (13, 14) et qu'audit fond intermédiaire est relié un cadre en tôle d'acier (15) servant à la fixation de l'enregistreur de route (2).
